# EUROPÄISCHE PATENTSCHRIFT

(11) **EP 0 590 412 B1**
(45) Veröffentlichungstag und Bekanntmachung des Hinweises auf die Patenterteilung: **02.12.1998**
(21) Anmeldenummer: 93114838.1
(22) Anmeldetag: 15.09.1993
(51) Int. Cl.: H04L 12/40, H04B 7/26

(54) **Bussystem für Kommunikation und Steuerung in einer Mobilfunk-Feststation**
Bussystem for communication and control in a mobile radio base station
Système à bus pour la communication et la commande dans une station de base radio

(30) Priorität: 28.09.1992 DE 4232480; 13.11.1992 DE 4238410
(43) Veröffentlichungstag der Anmeldung: 06.04.1994
(73) Patentinhaber: SIEMENS AKTIENGESELLSCHAFT, 80333 München (DE)
(72) Erfinder: Fleckenstein, Volker, Dipl.-Ing., D-83052 Bruckmühl (DE); Rademacher, Angela, Dipl.-Ing., D-83607 Holzkirchen (DE); Ritter, Gerhard, Dipl.-Ing., D-86943 Thaining (DE)

(56) Entgegenhaltungen:
- EP-A- 0 439 926
- GB-A- 2 242 296
- COMMUTATION & TRANSMISSION Bd. 14, Nr. 1 , 1992 , PARIS FR Seiten 21 - 28 XP000257949 J.VARIN ET AL. 'Alcatel 900. A paneuropean cellular radiotelephone system'

## Beschreibung

Die Erfindung bezieht sich auf ein Kommunikations- und Steuersystem innerhalb der Feststation eines Mobilfunksystems, in der Sende- und Emfangseinrichtungen sowie Signalverarbeitungen enthalten sind. Ferner sind separate Einrichtungen für den Datenaustausch zwischen der Luftschrittstelle und der Vermittlungsanlage vorgesehen.

In einem Mobilfunknetz gibt es mehrere Frequenzen pro Funkzelle, über die Kommunikationskanäle übertragen werden. Ist die Verbindung über eine dieser Frequenzen zu schlecht, muß das Gespräch auf andere verfügbare Frequenzen in der Basisstation weitergeleitet werden, ohne die Verbindungsdurchschaltung in der Vermittlung zu wechseln. Pro Frequenz gibt es dabei zwei Hardwareeinrichtungen, die zum einen die nötigen Signalverarbeitungen an der Luftschnittstelle (Übertragungseinheit) und zum anderen den Datenaustausch zur Vermittlungsanlage (Signalisierungseinheit) bewerkstelligen. Um die Daten, kommend von der Vermittlungsanlage bzw. von der Luftschnittstelle zu den richtigen Hardwareeinrichtungen zu leiten, ergeben sich folgende Anforderungen:
a) Verteilung der Nutzdaten zwischen den jeweils zugeordneten Harwareeinrichtungen unter Berücksichtigung des Frequency Hoppings (rahmensynchrones Zeitmultiplexverfahren) und
b) flexibler und schneller Verbindungsaufbau (Signalisierung) sowie Überwachung der Funkstrecke (Maintenance) und Steuerung der Hardwareeinrichtungen (Operation).

In den Feststationen von Mobilfunksystemen existieren eine Reihe von Daten- und Steuerwegen zwischen den digitalen Signalverarbeitungen und den eigentlichen Sendern und Empfängern. Hinzu kommen Steuer- und Rückmeldesignale für die Betriebs- und Ablaufsteuerung (O & M - Operation and Maintenance). Diese Vielzahl von Signalen bedingt eine entsprechende Komplexität in der Leitungsführung, im Steckeraufwand und in der Rückwandverdrahtung. Darüberhinaus besitzen derartige Lösungen eine geringe Flexibilität. Aus EP 0 439 926 A2 ist eine Basisstation für ein Mobilfunksystem bekannt, die einen Multiplex-Bus zur Verbindung interner Baugruppen entsprechend zu verarbeitender Funkkanäle nutzt.

Der Erfindung liegt die Aufgabe zugrunde, ein Kommunkikations- und Steuerungssystem innerhalb einer Funkfeststation zu schaffen, das einen geringen Aufwand besitzt und sich durch hohe Leisungsfähigkeit und Flexibilität und eine einfache Datenvermittlung auszeichnet.

Diese Aufgabe wird gemäß der Erfindung gelöst durch ein die verschiedenen Baugruppen miteinander verbindendes Bussystem, über das die Daten parallel übertragen und parallel mit Prüfbits zur Fehlererkennung und Fehlerkorrektur erweitert werden, sowie durch eine einen Referenztakt und weitere Zeittakte liefernde Bussteuerung derart, daß die Übertragung auf dem Bus in Form von adressierten Datenpaketen innerhalb eines Zeitschlitzes und die Übertragung aller Information zwischen den Baugruppen während eines von mehreren Zeitschlitzen gebildeten Busrahmens erfolgt.

In vorteilhafter Ausgestaltung des Erfindungsgegenstandes ist dabei vorgesehen, daß das Bussystem aus einzelnen Modulen (Racks) aufgebaut ist, auf die die anfallende Nutzdatenrate pro Zeitintervall aufgeteilt wird und jedes Modul die Busübertragungskapazität für eine bestimmte Anzahl von Frequenzen zur Verfügung stellt und wobei für interne Übertragungen pro Frequenz und Zeitintervall eine feste Anzahl (n uplink und m downlink) von Datenpaketen über das Bussystem übertragen wird und daß zusätzlich zu den Nutzdatenpaketen Steuerungsdaten (O-& M-Datenpakete) zu den Einrichtungen zur Signalverarbeitung und für den Datenaustausch übertragen werden, für deren flexibles und schnelles Austauschen ein Kontrollverfahren definiert ist, das auf einem logischen Ring von den Teilnehmern zugeordneten Hartwareeinheiten basiert, in dem ein Zugriffsrecht zum Senden von einer Einheit zur nächsten weitergereicht wird. Der Vorteil dieser Ausbildung besteht darin, daß es ein offenes und erweiterbares System ist, mit dem im Prinzip beliebig viele Frequenzeinheiten in die Basistation integriert werden können.

Weitere vorteilhafte Ausgestaltungen und Weiterbildungen des Erfindungsgegenstandes sind in den Unteransprüchen 3 bis 25 angegeben.

Nachstehend wird die Erfindung anhand von in der Zeichnung dargestellten Ausführungsbeispielen näher erläutert.

Es zeigen
- Figur 1: die Baugruppen samt einem Bussystem einer Funkfeststation im Blockschaltbild,
- Figur 2: eine Anordnung mit räumlicher Trennung der Baugruppen,
- Figur 3: eine Anordnung mit Zusammenfassung der Signalverarbeitungen mehrerer Funkfeststationen und
- Figur 4: ein Modul eines Bussystems.

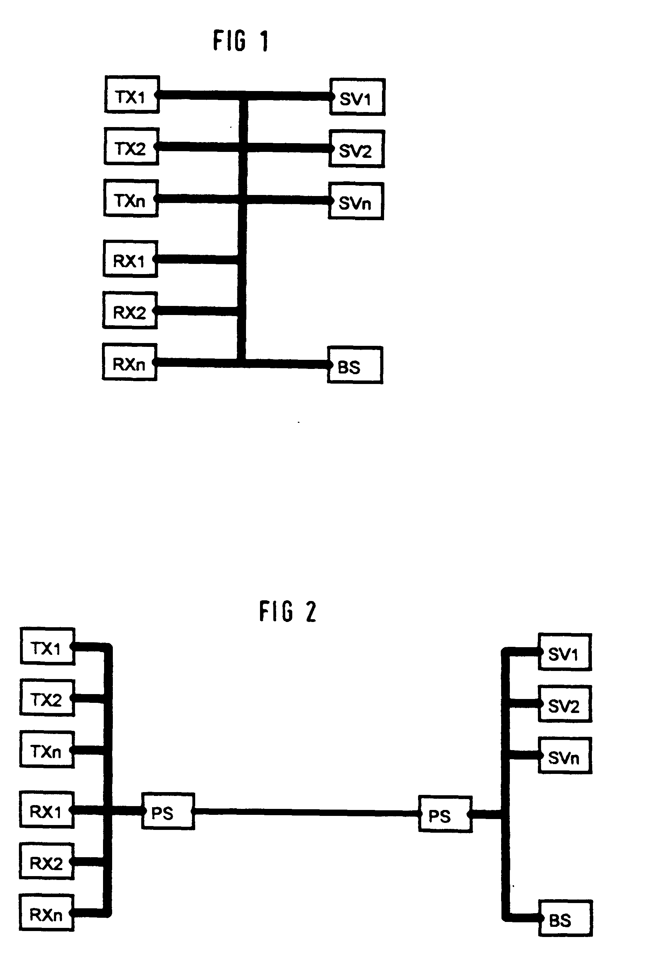

In Figur 1 sind die Einrichtungen einer Feststation dargestellt, in der die verschiedenen Baugruppen, nämlich die Sender TX1, TX2, TXn, die Empfänger RX1, RX2, RXn, die Signalverarbeitungen SV1, SV2, SVn und eine Bussteuerung BS über ein Bussystem (verstärkt gezeichnete Leitungen) miteinander verbunden sind. Die Daten werden parallel übertragen und parallel mit Prüfbits zur Fehlererkennung und Fehlerkorrektur erweitert. Die Bussteuerung BS liefert einen Referenztakt und weitere Zeittakte. Mit dem Referenztakt werden Daten auf den Bus gelegt und auch Daten vom Bus übernommen. Darüberhinaus dient der Referenztakt als Referezfrequenz für alle Baugruppen, von der alle benötigten Frequenzen abgeleitet werden. Die Zeittatke dienen der Organisation der Zeitschlitze und eines von mehreren Zeitschlitzen gebildeten Busrahmens.

Die Übertragung auf dem Bus erfolgt in Form von adressierten Datenpaketen, welche jeweils während eines Zeitschlitzes übertragen werden. Während eines Busrahmens erfolgt die Übertragung aller Informationen zwischen den Baugruppen. Für das GSM- (Group Special Mobile) bzw. DCS 1800-System wird in vorteilhafter Weise ein Busrahmen gleich einem GSM- bzw. DCS 1800-Burst gewählt.

Die Zeitschlitze müssen nicht gleich lang sein, sondern können auch unterschiedlich gewählt werden, um sich an unterschiedliches Datenaufkommen z.B. zu den Sendern und von dem Empfänger zu adaptieren. Das Datenaufkommen für die Betriebs- und Ablaufsteuerung (O & M) ist relativ gering, und es muß daher nicht während jedes Busrahmens ein Datenaustausch erfolgen. Es kann somit ein O & M-Rahmen gebildet werden, der aus mehreren Busrahmen besteht.

Der gesamte Datenaustausch erfolgt über dieses Bussystem. Ein Fehler oder Ausfall würde die gesamte Kommunikation innerhalb einer Feststation lahmlegen. Es ist daher in vorteilhafter Weise eine redundante Auslegung des gesamten Bussystems vorgesehen. Mit zwei derartigen Bussystemen, auf denen die gleiche Information übertragen wird, wird eine sehr hohe Sicherheit erreicht. Die jeweilige Sendestelle legt dabei auf beide Busse die gleich Information an. An der jeweiligen Empfangsstelle läßt sich aus der Auswerung des Prüfbits (mit evtl. Fehlerkorrektur) erkennen, über welches der beiden Bussysteme eine korrekte Übertragung erfolgt ist. Nur diese Daten werden dann weiterverwendet.

Aufgrund der Datenübertragung in Form von addressierten Datenpaketen läßt sich relativ einfach ein Frequenzsprungverfahren realisieren, indem von der digitalen Signalverarbeitung die Datenpakete an unterschiedliche Sender adressiert werden. Für die Empfangsdaten kann eine korrespondierende Adressierung durch den Empfänger an unterschiedliche Signalverarbeitungen erfolgen. Außerdem lassen sich einfach die Daten von mehreren Empfängern, die auf den gleichen Kanal abgestimmt sind, jedoch an unterschiedlichen Antennen betrieben werden, an eine Signalverarbeitung adressieren, die diese Daten gemeinsam auswertet.

Figur 2 zeigt eine Ausführungsform, bei der eine räumliche Trennung der digitalen Signalverarbeitung von den eigentlichen Sendern und Empfängern vorgesehen ist. Hierzu werden zwei Wandler PS vorgesehen, die die Daten von einem parallelen Busformat in ein serielles Format wandeln, so daß z.B. eine Übertragung über eine Glasfaser oder eine Richtfunkstrecke möglich ist. Zur Synchronisation dieser Wandler können beispielsweise am Ende der Zeitschlitze Synchronworte eingefügt werden. In der Figur sind auf der linken Seite die Sender TX1, TX2, TXn und die Empfänger RX1, RX2, RXn angeordnet und auf der rechten Seite die Signalverarbeitung SV1, SV2 SVn sowie die Bussteuerung BS. In der Nähe der Sender und Empfänger einerseits und der Signalverarbeitungen und der Bussteuerung andererseits ist jeweils ein Wandler PS im Bussystem eingefügt, die über eine Leitung hoher Übertragungskapazität, z.B. eine Glasfaser, miteinander verbunden sind. Eine derartige Lösung erlaubt eine antennennahe Anordnung der Sender und Empfänger, während die Signalverarbeitungen an einem besser zugänglichen Ort untergebracht werden.

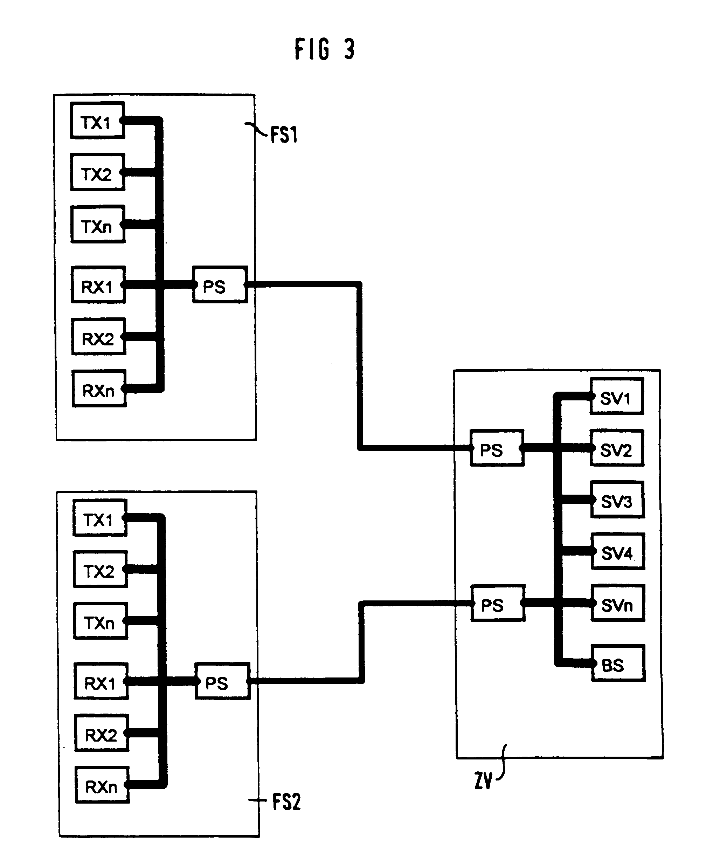

In einer vorteilhaften Weiterbildung ist vorgesehen, daß die Signalverarbeitungen mehrerer Funkfeststationen an einem gemeinsamen Ort zusammengefaßt sind. Dies ist in Figur 3 dargestellt, in der auf der linken Seite zwei Funkfeststationen FS1 und FS2 mit Sendern und Empfängern sowie einem Wandler entsprechend der Darstellung nach Figur 2 angeordnet sind und auf der rechten Seite sich die zentrale Verarbeitung ZV befindet, die die Signalverarbeitungen SV1...SV4, SVn sowie die Bussteuerung BS enthält und über jeweils einen Wandler PS mit dem Wandler der betreffenden Funkfeststation FS1 bzw. FS2 verbunden ist. Durch diese Ausbildung kann Nutzen dahingehend gezogen werden, daß statistisch die Funkfeststationen immer nur zu einem Bruchteil ihrer Kapazität ausgelastet sind, somit insgesamt also weniger Signalverarbeitungen erforderlich sind.

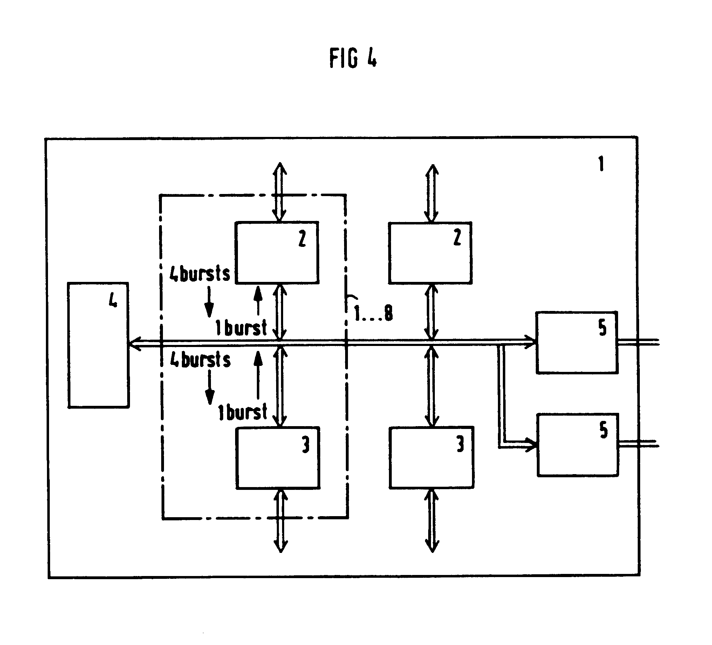

In einer Basisstation können entsprechend dem Ausbau n-Frequenzen gehandhabt werden. Pro Frequenz gibt es zwei Hardwareeinrichtungen, nämlich eine Übertragereinheit und eine Signalisierungseinheit, die zum einen die nötigen Signalverarbeitungen und zum anderen den Datenaustausch zwischen Luftschnittstelle und der Vermittlungsanlage bewerkstelligen. Das Bussystem ist aus einzelnen Modulen (Racks) aufgebaut, auf die die anfallende Nutzdatenrate pro Zeitintervall aufgeteilt wird. In Figur 4 ist ein solches Modul 1 dargestellt, das die Busübertragungskapazität für beispielsweise acht Frequenzen zur Verfügung stellt. Dieses Modul enthält dementsprechend acht Übertrager 2 sowie acht Signalisierungseinheiten 3, die über ein Bussystem miteinander verbunden sind. Ferner enthält das Modul 1 einen Controller 4 sowie Rack-Anbindungen 5 für entsprechend ausgebildete weitere Module. Die Module sind so aneinandersetzbar, daß jedes Modul mit jedem verbunden ist. Es ergibt sich dabei eine Sternstruktur. Die Buskapazität kann somit modular erweitert werden. In der Figur ist die zu einer Frequenz gehörende Einheit aus Übertrager 2 und Signalisierungseinheit 3 strichliert umrandet. Pro Frequenz und Zeitintervall wird eine feste Anzahl (n uplink und m downlink) Datenpakete über das Bussystem übertragen. Dies gilt für Übertragungen innerhalb des Moduls. Zur Kommunikation über die Modulgrenze hinweg mit einem zweiten Modul wird die doppelte Buskapazität benötigt. Innerhalb der Basisstation sind alle Signalisierungseinheiten mit allen Übertragereinheiten wahlfrei verschaltet und können Daten übermitteln. Es besteht dabei aber aktuell immer nur eine Verbindung zwischen einer Signalisierungseinheit und einer Sendeeinheit. Die Nutzdatenrate/Frequenz, die zwischen den Hardwareeinrichtungen ausgetauscht wird, beträgt 120 Bytes/577 µs. Diese wird aufgeteilt in bursts von je 24 Bytes, wobei 2 Byte für die Adresse und 22 Bytes für die Daten vorgesehen sind. Zu berücksichtigen ist bei der Struktur des Busses, daß bei upstream die vierfache Datenmenge anfällt wie bei downstream, so daß die fünf bursts/577µs Nutzdatenrate aufgeteilt ist in ein burst downstream und vier burst upstream.

In dem Bussystem eines Moduls (Rack) für acht Frequenzen sind primär die Nutzdaten zwischen acht Frequenzeinheiten = 40 burst/577 µs zu verteilen. Zusätzlich können diese Hardwareeinrichtungen mit Einheiten in externen Racks verbunden werden. Wenn alle Hardwareeinrichtungen über externe Racks verbunden werden, müssen alle Empfangs- und Sendebursts pro Hardwareeinrichtung = 80 bursts/577 µs (= 1 frame) zur Verfügung stehen. Diese 80 burst-Nutzdaten werden so aufgeteilt, daß die Datenübertragung und auch eine verschärfte Timinganforderung erfüllt werden. Es ist nämlich darauf zu achten, daß über Rack-Grenzen bei der Datenübertragung trotz Verzögerungs- und Vermittlungszeit kein Rahmenversatz gegeben ist, d.h. unabhängig davon, ob ein Übertrager und eine Signalisierungseinheit innerhalb oder in getrennten Racks liegen, müssen sie in einem frame die in diesem frame empfangenen Daten austauschen. Die 80 burst/frame sind dabei in zwei Gruppen, nämlich zur einen Hälfte für interne bursts und zur anderen für externe bursts aufgeteilt, wobei die externen bursts zeitlich früher im frame liegen als die internen. Die Zuweisung der bursts zu den Einheiten wird über die Adresse der Hardwareeinrichtung festgelegt. Diese Adresse besteht neben der Baugruppenadresse noch aus der Rack-Adresse.

Empfangen können Hardwareeinrichtungen (Übertrager und Signalisierungseinrichtungen) innerhalb eines Racks nur Daten in den internen bursts. Sender in dem internen Rack müssen die zu sendenden Daten auf die entsprechenden bursts, die die Empfänger lesen, senden. Dies gilt sowohl für die Übertrager bzw. Signalisierungseinheiten innerhalb des Rack als auch für die Rack-Anbindungen. Der Empfänger überprüft in den zugewiesenen internen bursts zusätzlich die mitgesendete Adresse. Entspricht sie seiner Adresse, so verarbeitet er die Daten. Daten, die in externen Racks übertragen werden, werden in den internen bursts gesendet und zwar in den bursts, die dem Sender zugeteilt sind. Die Adresse in den bursts enthält neben der Adresse der Einheit im externen Rack auch die Rack-Adresse selbst. Die externen bursts werden in der Rack-Anbindung gelesen, die Daten für das zugehörige Rack werden gespeichert und im internen burst des Bussystems im Empfänger-Rack an die richtige burst-Position wieder ausgegeben.

Zusätzlich zu den Nutzdatenpaketen müssen noch Steuerungsdaten zwischen den Hardwareeinrichtungen (Übertrager und Signalisierungseinheit) übertragen werden. Diese treten sporadisch auf und sind nicht an ein festes Zeitraster gebunden. Für ein flexibles und schnelles Austauschen der Steuerungsdaten werden 22 burst/577 µs in dem frame reserviert, die mittels eines speziellen Kontrollverfahrens auf die Hardwareeinrichtungen verteilt werden. In den so zugewiesenen bursts können dann die Einrichtungen ihre Daten senden.

Dieses Kontrollverfahren basiert auf einem logischen Ring von den Teilnehmern, in dem ein Zugriffsrecht auf die Steuerungs-bursts kreist. Der Ring der Teilnehmer wird mit den Adressen der Hardwareeinrichtungen aufgebaut. Er wird nach den Adressen der Teilnehmer so geordnet, daß der Teilnehmer mit der nächst niedrigeren Adresse der Nachfolger wird. Der Nachfolger des Teilnehmers mit der niedrigsten Adresse ist der Teilnehmer mit der höchsten Adresse. Somit ist der Ring geschlossen. Wichtig ist, daß jeder Teilnehmer die Identität seines Nachfolgers kennt. Hierzu ist vorgesehen, daß jeder Teilnehmer in dem Ring zwei Adressenregister verwaltet, nämlich eines mit der eigenen Adresse und eines mit der Nachfolgeadresse.

Das Zugriffsrecht auf die Steuerungsbursts ist selbst ein Kontrollburst. Es enthält die Kontrollinformation und die Adresse des Teilnehmers, für den das Zugriffsrecht gelten soll. Bei Empfang des Zugriffsrechts hat der Teilnehmer die Kontrolle über die Steuerungsbursts. Nachdem die Steuerungsdaten gesendet sind, wird das Zugriffsrecht an den Nachfolger weitergeleitet. Die der Kontrollinformation folgende Adresse besteht aus einer Gruppenadresse und der Bezeichnung einer Baugruppe. Bei der Adressierung einer einzelnen Baugruppe muß die Gruppenadresse "00" sein. Die Baugruppen können in drei unabhängigen Baugruppen zusammengebunden werden. Dies erlaubt eine gleichzeitige Übertragung von Steuerungsmeldungen zu allen Teilnehmern einer Gruppe.

Nach dem Senden des Zugriffsrechts überprüft der Teilnehmer, ob der Nachfolger dieses Recht empfangen hat. Dies ist der Fall, wenn der Nachfolger Daten oder ein Kontrollburst im nächsten burst aussendet. Ist dies nicht der Fall, wird das Zugriffsrecht ein zweites Mal gesendet. Antwortet der Nachfolger wiederum nicht, so muß der Ring neu initialisiert werden. Die Initialisierungsprozedur wird gestartet, wenn der Nachfolger sich nicht meldet, ein Zugriffsrecht verlorengeht, nach einem Reset, beim Zufügen von neuen Teilnehmern in den Ring oder Verlassen von Teilnehmern aus dem Ring. Um die Initialisierung zu starten, werden nicht benutzte Bytes im Kontrollburst verwendet. Dabei können alle Teilnehmer, die an den Ring angeschlossen werden wollen, an diese Stelle den Initialisierungswunsch senden. Es können auch mehrere Teilnehmer gleichzeitig senden ohne Kollision, da alle das gleiche Bit Pattern senden. Wird der Initialisierungswunsch von den Teilnehmern detektiert, so wird in den nächstn beiden Steuerungsbursts (Initialisierungsperiode) der Ring neu aufgebaut, wobei während der Initialisierungsperiode jeder Teilnehmer seine Adresse an der dieser Adresse zugewiesenen Byteposition sendet. Für die Initialisierung öffnet jeder Teilnehmer sein Nachfolgeradressenregister und überschreibt es mit den empfangenen gültigen Adressen, bis der Teilnehmer seinerseits seine Adresse sendet. Danach enthält das Nachfolgeradressenregister die letzte empfangene gültige Adresse, bevor gesendet wird. Die Ausnahme bildet der erste Teilnehmer, der sendet, bevor eine gültige Adresse empfangen wurde. In diesem Fall schließt der Teilnehmer sein Register erst nach Beendigung der Initialisierungsperiode und erhält als Nachfolger automatisch den Teilnehmer mit der höchsten Adresse. Der logische Ring ist nun neu initialisiert, worauf das Zugriffsrecht zum neuen Nachfolger weitergereicht wird.

Die gleiche Initialisierungsprozedur wird gestartet, wenn ein neuer Teilnehmer in den Ring eintreten möchte. Nach einem Reset oder bei Verlust des Zugriffsrechts besitzt kein Teilnehmer des Recht zum Senden. Somit wird der Bus zu dieser Zeit getristated. Bei Detektierung dieser Inaktivität für einen Rahmen wird eine Initialisierung gestartet, indem ein Zugriffsrecht mit der Adresse "0" um den Initialisierungswunsch gesendet wird. Dies kann von mehreren Teilnehmern gleichzeitig geschehen. Da von allen das gleiche Bitmuster gesendet wird, liegt keine Kollision vor. Nach der Initialisierungsprozedur hat der Teilnehmer mit der niedrigsten Adresse das Zugriffsrecht und kann seine Daten senden. Teilnehmer mit der niedrigsten Adresse ist der Teilnehmer, dessen Nachfolgeradresse größer ist als seine eigene. Dabei gibt es nur einen Teilnehmer, auf den dies zutrifft.

Hinsichtlich der Teilnehmer unterscheidet man zwei Klassen, nämlich eine erste, in der der Teilnehmer ständiges Ringmitglied ist und das Zugriffsrecht kreisen läßt, und eine zweite, in der der Teilnehmer nur dann Mitglied im Ring wird, wenn er Daten zu senden hat. Dabei sendet er nach Empfang des Zugriffsrechts seine Daten und verläßt anschließend den Ring, indem er eine Initialisierung startet mit der Adresse "0" (wie bei Reset). Auch hier wird der Teilnehmer mit der niedrigsten Adresse im Ring Besitzer des Zugriffsrechts.

Durch Einführen der beiden Klassen kann man die Kreisdauer des Zugriffsrechts im Ring verkürzen. Dies ist sinnvoll, wenn es viele Teilnehmer gibt, die nur im Fehlerfall eine Fehlernachricht absetzen müssen.

Alle Teilnehmer, unabhängig davon ob sie aktiv oder passiv sind, empfangen ständig Daten. Wenn ein Teilnehmer meint, daß er Ringmitglied sei, jedoch das Zugriffrecht nicht erhält, so startet er die Initialisierung von neuem.

In der Basisstation gibt es noch Steuerungsmeldungen, die zentral erzeugt werden und in einem festen Zeitraster zu senden sind. Für diese Meldung wird in dem Bussystem ein Broadcast burst bereitgestellt. In einem Rahmen (577 µs) sind somit 80 burst Nutzdaten, 22 bursts Steuerungsdaten und 1 burst Broadcast verfügbar.

## Patentansprüche

1. Kommunikations- und Steuersystem für eine Feststation (FS1, FS2) eines Mobilfunksystems, in der Sende- (TX1, TX2, TXn) und Empfangseinrichtungen (RX1, RX2, RXn) sowie Signalverarbeitungen (SV1, SV2, SVn) enthalten sind, **gekennzeichnet** durch ein die verschiedenen Baugruppen (TX1, TX2, TXn, RX1, RX2, RXn, SV1, SV2, SVn) miteinander verbindendes Bussystem, über das die Daten parallel übertragen und parallel mit Prüfbits zur Fehlererkennung und Fehlerkorrektur erweitert werden, sowie durch eine einen Referenztakt oder Sync-Worte liefernde Busssteuerung (BS) derart, daß die Übertragung auf dem Bus in Form von adressierten Datenpaketen innerhalb eines Zeitschlitzes und die Übertragung aller Informationen zwischen den Baugruppen (TX1, TX2, TXn, RX1, RX2, RXn, SV1, SV2, SVn) während eines von mehreren Zeitschlitzen gebildeten Busrahmens erfolgt.

2. Kommunikations- und Steuersystem nach Anspruch 1, dadurch **gekennzeichnet,** daß das Bussystem aus einzelnen Modulen (Racks, 1, 2, 3, 4, 5) aufgebaut ist, auf die die anfallende Nutzdatentate pro Zeitintervall aufgeteilt wird und jedes Modul (1, 2, 3, 4, 5) die Busübertragungskapazität für eine bestimmte Anzahl von Frequenzen zur Verfügung stellt und wobei für interne Übertragungen pro Frequenz und Zeitintervall eine feste Anzahl (n uplink und m downlink) von Datenpaketen über das Bussystem übertragen werden, für deren flexibles und schnelles Austauschen ein Kontrollverfahren definiert ist, das auf einem logischen Ring von den Teilnehmern zugeordneten Hardwareeinheiten basiert, in dem ein Zugriffsrecht zum Senden von einer Einheit zur nächsten weitergereicht wird.

3. Kommunikations- und Steuersystem nach Anspruch 1 oder 2 dadurch **gekennzeichnet,** daß mit dem Referenztakt Daten auf den Bus gelegt und vom Bus übernommen werden.

4. Kommunikations- und Steuersystem nach Anspruch 3 dadurch **gekennzeichnet,** daß der Referenztakt als Referenzfrequenz für alle Baugruppen (TX1, TX2, TXn, RX1, RX2, RXn, SV1, SV2, SVn) verwendet wird.

5. Kommunikations- und Steuersystem nach einem der Ansprüche 1 bis 4 dadurch **gekennzeichnet,** daß die Zeittakte für die Organisation der Zeitschlitze und des Busrahmens verwendet werden.

6. Kommunikations- und Steuersystem nach einem der Ansprüche 1 bis 5, dadurch **gekennzeichnet,** daß die Länge der einzelnen Zeitschlitze entsprechend unterschiedlichem Datenaufkommen unterschiedlich bemessen ist.

7. Kommunikations- und Steuersystem nach einem der Ansprüche 1 bis 6, dadurch **gekennzeichnet,** daß der über das Bussytem erfolgende Datenaustausch die Daten für eine Betriebsund Ablaufsteuerung mitenthält.

8. Kommunikations- und Steuersystem nach einem der Ansprüche 1 bis 7 dadurch **gekennzeichnet,** daß das gesamte Bussystem durch Verdopplung redundant ausgelegt ist.

9. Kommunikations- und Steuersystem nach Anspruch 8 dadurch **gekennzeichnet,** daß sendeseitig auf beide Busse die gleiche Information gelegt wird und empfangsseitig nach Auswertung der Prüfbits nur die Daten aus dem Bussystem mit korrekter Übertragung weiterverwendet werden.

10. Kommunikations- und Steuersystem nach einem der Ansprüche 1 bis 9, **gekennzeichnet** durch ein Frequenzsprungverfahren bei der in Form von adressierten Datenpaketen erfolgenden Datenübertragung.

11. Kommunikations- und Steuersystem nach einem der Ansprüche 1 bis 10 **gekennzeichnet** durch eine räumliche Trennung der digitalen Signalverarbeitungen von den Sende- (TX1, TX2, TXn) und Empfangseinrichtungen (RX1, RX2, RXn).

12. Kommunikations- und Steuersystem nach Anspruch 11 **gekennzeichnet** durch zwei Wandler (PS), die die Daten von einem parallel Busformat in ein serielles Format wandeln zur größeren räumlichen Trennung mittels Leitungen, Glasfaser oder Richtfunkstrecken.

13. Kommunikations- und Steuersystem nach einem der Ansprüche 1 bis 12, **gekennzeichnet** durch eine Zusammenfassung der Signalverarbeitungen (SV1, SV2, SVn) mehrerer Funkfeststationen (FS1, FS2) an einem gemeinsamen Ort (ZV).

14. Kommunikations- und Steuersystem nach einem der Ansprüche 1 bis 13, dadurch **gekennzeichnet,** daß die Module (1, 2, 3, 4, 5) so aneinandersetzbar sind, daß jedes Modul (1, 2, 3, 4, 5) mit jedem verbunden ist.

15. Kommunikations- und Steuersystem nach einem der Ansprüche 1 bis 14, dadurch **gekennzeichnet,** daß in der Basisstation (F1, F2) alle Signalisierungseinheiten und Übertragungseinheiten wahlfrei verschaltet sind.

16. Kommunikations- und Steuersystem nach einem der Ansprüche 1 bis 15, dadurch **gekennzeichnet,** daß zwischen den einzelnen Racks Rahmengleichheit besteht.

17. Kommunikations- und Steuersystem nach Anspruch 16, dadurch **gekennzeichnet,** daß die Datenbursts pro Rahmen in eine Gruppe interne bursts und eine Gruppe externe bursts aufgeteilt sind, von denen die externen bursts zeitlich früher im Rahmen liegen als die internen.

18. Kommunikations- und Steuersystem nach einem der Ansprüche 1 bis 17, dadurch **gekennzeichnet,** daß für die zusätzlich zu übertragenden Steuerungsdaten eine bestimmte Anzahl von bursts im Rahmen reserviert ist, die zwischen den Daten der Hardwareeinrichtungen (Übertrager und Signalisierungseinrichtung) übertragern werden.

19. Kommunikations und Steuersystem nach einem der Ansprüche 1 bis 18, dadurch **gekennzeichnet**, daß der logische Ring der Teilnehmer beim Kontrollverfahren für die Steuerungsdaten mit den Adressen der Hardwareeinrichtungen aufgebaut und so nach den Adressen der Teilnehmer geordnet ist, daß der Teilnehmer mit der nächstniedrigeren Adresse der Nachfolger wird und der Nachfolger des Teilnehmers mit der niedrigsten Adresse der Teilnehmer mit der höchsten Adresse ist.

20. Kommunikations und Steuersystem nach einem der Ansprüche 1 bis 19, dadurch **gekennzeichnet,** daß nach dem Senden des Zugriffsrechts vom Teilnehmer der Empfang beim Nachfolger geprüft wird und daß nach einem zweiten Aussenden ohne Antwort des Nachfolgers der Ring neu initialisiert wird.

21. Kommunikations- und Steuersystem nach Anspruch 20, dadurch gekennzeichnet, daß während der Initialisierungsperiode jeder Teilnehmer seine Adresse an einer dieser Adresse zugewiesenen Byteposition sendet.

22. Kommunikations- und Steuersystem nach Anspruch 21, gekennzeichnet durch eine entsprechende Initialisierungsprozedur beim Zugangswunsch eines neuen Teilnehmers in den Ring.

23. Kommunikations- und Steuersystem nach einem der Ansprüche 1 bis 22, gekennzeichnet durch zwei Teilnehmerklassen, bei deren einer der Teilnehmer ständig Ringmitglied ist und das Zugriffsrecht kreisen läßt und bei deren anderer der Teilnehmer nur dann Mitglied im Ring wird, wenn er Daten zu senden hat.

24. Kommunikations- und Steuersystem nach einem der Ansprüche 1 bis 23, dadurch gekennzeichnet, daß jeder Teilnehmer im Ring ein Adressenregister mit der eigenen Adresse und ein Adressenregister mit der Nachfolgeradresse verwaltet.

25. Kommunikations- und Steuersystem nach einem der Ansprüche 1 bis 23, gekennzeichnet durch weitere, zentral erzeugte und in einem festen Zeitraster zu sendende Steuerungsmeldungen in der Basisstation (FS1, FS2), für die im Bussystem ein Broadcast burst bereitgestellt wird.

## Claims

1. Communications and control system for a base station (FS1, FS2) of a mobile radio system, which base station (FS1, FS2) contains transmitting (TX1, TX2, TXn) and receiving devices (RX1, RX2, RXn) as well as signal processing devices (SV1, SV2, SVn), characterized by a bus system which connects the various assemblies (TX1, TX2, TXn, RX1, RX2, RXn, SV1, SV2, SVn) to one another and via which the data are transmitted in parallel and are expanded in parallel by check bits for error identification and error correction, as well as by a bus controller (BS), which supplies a reference clock or sync words, in such a manner that the transmission on the bus takes place in the form of addressed data packets within a time slot and the transmission of all the information between the assemblies (TX1, TX2, TXn, RX1, RX2, RXn, SV1, SV2, SVn) takes place during a bus frame which is formed by a plurality of time slots.

2. Communications and control system according to Claim 1, characterized in that the bus system is formed from individual modules (Racks, 1, 2, 3, 4, 5) between which the occurring useful data rate per time interval is split and each module (1, 2, 3, 4, 5) makes available the bus transmission capacity for a specific number of frequencies, and a fixed number (n uplink and m downlink) of data packets being transmitted via the bus system per frequency and time interval for internal transmissions, for the flexible and rapid interchange of such data packets a monitoring procedure being defined which is based on a logic ring of hardware units which are assigned to the subscribers, and in which monitoring procedure an access right for transmitting is passed on from one unit to the next.

3. Communications and control system according to Claim 1 or 2, characterized in that data are passed to the bus and are taken from the bus at the reference clock rate.

4. Communications and control system according to Claim 3, characterized in that the reference clock rate is used as the reference frequency for all the assemblies (TX1, TX2, TXn, RX1, RX2, RXn, SV1, SV2, SVn).

5. Communications and control system according to one of Claims 1 to 4, characterized in that the time clocks are used for organization of the time slots and of the bus frame.

6. Communications and control system according to one of Claims 1 to 5, characterized in that the length of the individual time slots is different corresponding to the different data arisings.

7. Communications and control system according to one of Claims 1 to 6, characterized in that the data interchange which takes place via the bus system also includes the data for operation and sequence control.

8. Communications and control system according to one of Claims 1 to 7, characterized in that the entire bus system is designed to be redundant, by duplication.

9. Communications and control system according to Claim 8, characterized in that the same information is passed to both buses at the transmitting end and, at the receiving end, only the data from the bus system with correct transmission continues to be used once the check bits have been evaluated.

10. Communications and control system according to one of Claims 1 to 9, characterized by a frequency hopping method for the data transmission, which takes place in the form of addressed data packets.

11. Communications and control system according to one of Claims 1 to 10, characterized by the digital signal processing devices being physically isolated from the transmitting (TX1, TX2, TXn) and receiving devices (RX1, RX2, RXn).

12. Communications and control system according to Claim 11, characterized by two converters (PS) which convert the data from a parallel bus format into a serial format, for greater physical isolation between lines, glass fibres or radio links.

13. Communications and control system according to one of Claims 1 to 12, characterized by the signal processing devices (SV1, SV2, SVn) of a plurality of base radio stations (FS1, FS2) being combined at a common location (ZV).

14. Communications and control system according to one of Claims 1 to 13, characterized in that the modules (1, 2, 3, 4, 5) can be placed adjacent to one another such that each module (1, 2, 3, 4, 5) is connected to all the others.

15. Communications and control system according to one of Claims 1 to 14, characterized in that all the signalling units and transmission units are connected arbitrarily in the base station (F1, F2).

16. Communications and control system according to one of Claims 1 to 15, characterized in that frame equality exists between the individual racks.

17. Communications and control system according to Claim 16, characterized in that the data bursts per frame are split into a group of internal bursts and a group of external bursts, of which the external bursts are located earlier in time in the frame than the internal bursts.

18. Communications and control system according to one of Claims 1 to 17, characterized in that a specific number of bursts in the frame are reserved for the control data that need to be transmitted additionally, and are transmitted between the data of the hardware devices (transformer and signalling device).

19. Communications and control system according to one of Claims 1 to 18, characterized in that the logic ring of subscribers for the monitoring procedure for the control data is formed with the addresses of the hardware devices and is organized on the basis of the addresses of the subscribers such that the subscriber having the next lower address becomes the successor, and the successor to the subscriber with the lowest address is the subscriber with the highest address.

20. Communications and control system according to one of Claims 1 to 19, characterized in that, once the access right has been transmitted by the subscriber, reception at the successor is checked, and in that, after a second transmission without a response from the successor, the ring is initialized once again.

21. Communications and control system according to Claim 20, characterized in that, during the initialization period, each subscriber transmits his address at a byte position assigned to this address.

22. Communications and control system according to Claim 21, characterized by an appropriate initialization procedure in the case of an access request from a new subscriber to the ring.

23. Communications and control system according to one of Claims 1 to 22, characterized by two subscriber classes, in the case of one of which the subscriber is always a ring member and allows the access right to circulate and in the case of the other of which the subscriber becomes a member of the ring only when he has data to transmit.

24. Communications and control system according to one of Claims 1 to 23, characterized in that each subscriber in the ring maintains an address register with his own address and an address register with the successor address.

25. Communications and control system according to one of Claims 1 to 23, characterized by further control messages, which are produced centrally and are to be transmitted in a fixed time frame, in the base station (FS1, FS2), for which control messages a broadcast burst is provided in the bus system.

## Revendications

1. Système de communication et de commande pour une station de base (FS1, FS2) qui fait partie d'un système de radiocommunication mobile et qui contient des dispositifs émetteurs (TX1, TX2, TXn) et des dispositifs récepteurs (RX1, RX2, RXn) ainsi que des dispositifs de traitement de signaux (SV1, SV2, SVn), caractérisé par un système à bus, qui relie les différents composants (TX1, TX2, TXn, RX1, RX2, RXn, SV1, SV2, SVn) et par l'intermédiaire duquel les données sont transmises en parallèle et sont complétées en parallèle par des bits de contrôle pour la détection et la correction d'erreurs, ainsi que par une commande de bus (BS) qui fournit une horloge de référence ou des mots de synchronisation de telle sorte que la transmission sur le bus s'effectue dans un créneau temporel sous forme de paquets de données adressés et la transmission de toutes les informations entre les composants (TX1, TX2, TXn, RX1, RX2, RXn, SV1, SV2, SVn) s'effectue pendant une trame de bus formée de plusieurs créneaux temporels.

2. Système de communication et de commande selon la revendication 1, caractérisé par le fait que le système à bus est conçu à partir de différents modules (racks, 1, 2, 3, 4, 5) sur lesquels est réparti le débit de données utiles arrivant par intervalle de temps et chaque module (1, 2, 3, 4, 5) met à disposition la capacité de transmission de bus pour un certain nombre de fréquences, un nombre fixé (n uplink et m downlink) de paquets de données étant transmis par l'intermédiaire du système à bus, par fréquence et par intervalle de temps, pour des transmissions internes, un procédé de contrôle étant déterminé pour l'échange souple et rapide de ces paquets de données, lequel procédé de contrôle est basé sur un anneau logique d'unités matérielles associées aux utilisateurs dans lequel un droit d'accès pour l'émission est passé d'une unité à la suivante.

3. Système de communication et de commande selon la revendication 1 ou 2, caractérisé par le fait que des données sont déposées ou prises sur le bus suivant l'horloge de référence.

4. Système de communication et de commande selon la revendication 3, caractérisé par le fait que l'horloge de référence est utilisée comme fréquence de référence pour tous les composants (TX1, TX2, TXn, RX1, RX2, RXn, SV1, SV2, SVn).

5. Système de communication et de commande selon l'une des revendications 1 à 4, caractérisé par le fait que les horloges sont utilisées pour l'organisation des créneaux temporels et de la trame de bus.

6. Système de communication et de commande selon l'une des revendications 1 à 5, caractérisé par le fait que la longueur des différents créneaux temporels est différente selon les débits de données différents.

7. Système de communication et de commande selon l'une des revendications 1 à 6, caractérisé par le fait que l'échange de données s'effectuant par l'intermédiaire du système à bus contient aussi les données pour une commande d'exploitation et de maintenance.

8. Système de communication et de commande selon l'une des revendications 1 à 7, caractérisé par le fait que l'ensemble du système à bus est conçu redondant par duplication.

9. Système de communication et de commande selon la revendication 8, caractérisé par le fait que, côté émission, la même information est déposée sur les deux bus et, côté réception, après évaluation des bits de contrôle, seules les données provenant du système à bus ayant une transmission correcte sont réutilisées.

10. Système de communication et de commande selon l'une des revendications 1 à 9, caractérisé par un procédé à saut de fréquence pour la transmission de données s'effectuant, sous forme de paquets de données adressés.

11. Système de communication et de commande selon l'une des revendications 1 à 10, caractérisé par une séparation dans l'espace des dispositifs de traitement de signaux numériques vis-à-vis des dispositifs émetteurs (TX1, TX2, TXn) et des dispositifs récepteurs (RX1, RX2, RXn).

12. Système de communication et de commande selon la revendication 11, caractérisé par deux convertisseurs (PS) qui convertissent les données d'un format de bus parallèle en un format série en vue d'une plus grande séparation dans l'espace au moyen de lignes, de fibres de verre ou de lignes de transmission hertzienne.

13. Système de communication et de commande selon l'une des revendications 1 à 12, caractérisé par un regroupement des dispositifs de traitement de signaux (SV1, SV2, SVn) de plusieurs stations radio de base (FS1, FS2) en un endroit commun (ZV).

14. Système de communication et de commande selon l'une des revendications 1 à 13, caractérisé par le fait que les modules (1, 2, 3, 4, 5) peuvent être réunis les uns aux autres de telle sorte que tout module (1, 2, 3, 4, 5) est relié à tout autre module (1, 2, 3, 4, 5).

15. Système de communication et de commande selon l'une des revendications 1 à 14, caractérisé par le fait que, dans la station de base (FS1, FS2), toutes les unités de signalisation et toutes les unités de transmission sont câblées librement.

16. Système de communication et de commande selon l'une des revendications 1 à 15, caractérisé par le fait qu'il existe une égalité de trame entre les différents racks.

17. Système de communication et de commande selon la revendication 16, caractérisé par le fait que les salves de données par trame sont réparties en un groupe de salves internes et un groupe de salves externes, les salves externes se trouvant dans la trame plus tôt que les salves internes.

18. Système de communication et de commande selon l'une des revendications 1 à 17, caractérisé par le fait que, pour les données de commande à transmettre en plus, il est réservé dans la trame un certain nombre de salves qui sont transmises entre les dispositifs matériels (transmetteur et dispositif de signalisation).

19. Système de communication et de commande selon l'une des revendications 1 à 18, caractérisé par le fait que l'anneau logique des utilisateurs est construit lors du procédé de contrôle pour les données de commande avec les adresses des dispositifs matériels et est ordonné selon les adresses des utilisateurs de telle sorte que l'utilisateur ayant l'adresse inférieure suivante devient le suivant et le suivant de l'utilisateur ayant la plus petite adresse est l'utilisateur ayant la plus grande adresse.

20. Système de communication et de commande selon l'une des revendications 1 à 19, caractérisé par le fait que, après l'émission du droit d'accès par l'utilisateur, la réception par le suivant est contrôlée et, après une deuxième émission sans réponse du suivant, l'anneau est à nouveau initialisé.

21. Système de communication et de commande selon la revendication 20, caractérisé par le fait que, pendant la période d'initialisation, chaque utilisateur émet son adresse à une position d'octet attribuée à cette adresse.

22. Système de communication et de commande selon la revendication 21, caractérisé par une procédure d'initialisation appropriée lors du souhait d'accès d'un nouvel utilisateur dans l'anneau.

23. Système de communication et de commande selon l'une des revendications 1 à 22, caractérisé par deux classes d'utilisateurs selon lesquelles, dans l'une des classes, l'utilisateur est un membre permanent de l'anneau et laisse tourner le droit d'accès et, dans l'autre classe, l'utilisateur est un membre de l'anneau seulement lorsqu'il a des données à émettre.

24. Système de communication et de commande selon l'une des revendications 1 à 23, caractérisé par le fait que chaque utilisateur dans l'anneau gère un registre d'adresse avec sa propre adresse et un registre d'adresse avec l'adresse du suivant.

25. Système de communication et de commande selon l'une des revendications 1 à 23, caractérisé par d'autres messages de commande, dans la station de base (FS1, FS2), produits de manière centralisée et à émettre dans une cadre temporel fixé, pour lesquels il est prévu une salve de diffusion dans le système à bus.
